# FASCICULE DE BREVET EUROPEEN

(11) **EP 2 433 085 B1**
(45) Date de publication et mention de la délivrance du brevet: **25.10.2017**
(21) Numéro de dépôt: 10722998.1
(22) Date de dépôt: 17.05.2010
(51) Int. Cl.: G01B 5/008, G01B 5/00

(54) **DISPOSITIF DE MESURE TRIDIMENSIONNELLE**
DREIDIMENSIONALE MESSVORRICHTUNG
THREE-DIMENSIONAL MEASUREMENT DEVICE

(30) Priorité: 19.05.2009 FR 0902420
(43) Date de publication de la demande: 28.03.2012
(73) Titulaire: Celette France, 38200 Vienne (FR)
(72) Inventeur: JOURDAN, Stéphane, F-38370 Saint-prim (FR)
(74) Mandataire: Parzy, Benjamin Alain
(86) Numéro de dépôt international: PCT/EP2010/056742
(87) Numéro de publication internationale: WO 2010/133552

(56) Documents cités:
- EP-A1- 1 286 130
- US-A- 6 125 337
- US-A1- 2002 029 485
- US-A1- 2009 177 435

## Description

### DOMAINE DE L'INVENTION

La présente invention concerne un dispositif de mesure tridimensionnelle.

### ARRIERE-PLAN DE L'INVENTION

Il existe de nombreux dispositifs de mesure tridimensionnelle dans des domaines d'utilisation variés. A titre d'illustration non limitative, l'invention s'intéressera plus particulièrement à l'utilisation de ce type de dispositif de mesure pour le contrôle des déformations d'une carrosserie de véhicule endommagé.

Un premier type connu de dispositifs de mesure tridimensionnelle a recours à une pluralité de bras articulés qui comportent chacun des capteurs angulaires intégrés afin de déterminer les angles de rotation des bras autour de chacun de leurs axes d'articulation prévus. Il est ainsi connu du document WO 2006/111630-A1 un dispositif de mesure de ce type, comportant plusieurs bras d'articulation sous forme de tubes creux intercalés entre deux tronçons dont l'un reçoit un capteur angulaire, chaque tube creux présentant une configuration d'aboutement complémentaire de celles des extrémités des tronçons de bras adjacents. Cette conception de bras articulés est intéressante car modulaire. Cependant, elle nécessite, pour réaliser la mesure, au moins deux bras articulés l'un à l'autre, ce qui rend la fabrication et la mise en oeuvre du dispositif relativement complexes, et ce qui rend le dispositif relativement peu compact et onéreux.

Le document WO-2007/101 905 A1 décrit un autre dispositif à plusieurs bras articulés.

On pourra également se référer pour les dispositifs multi-bras aux documents US-2002/0029485 A1, US-6 125 337 A et EP-1 286 130 A1.

Il est également connu des dispositifs de mesure ayant recours à des tiges télescopiques. Par exemple, le dispositif de mesure décrit dans le document FR-A-2 909 765 A1 de la demanderesse comprend des moyens télescopiques comportant une tige-piston coulissant verticalement dans une colonnette associée, colonnette supportée par des poutres d'un banc de contrôle et référencée par rapport à celle-ci au moyen de perçages appropriés sur lesquelles la colonnette est fixée. La tige-piston est choisie parmi une pluralité de tiges piston de longueurs axiales différentes. Cette solution est également intéressante, dans la mesure où la tige-piston est interchangeable en fonction de la hauteur relative des points de la carrosserie à mesurer par rapport au banc de contrôle. Cependant, elle nécessite une manipulation fréquente du dispositif afin de monter et démonter les tiges piston en fonction, notamment, du type de véhicule à contrôler.

### OBJET DE L'INVENTION

L'invention a pour objet de proposer un dispositif de mesure tridimensionnelle dont la conception vise à minimiser les inconvénients précités. Elle vise ainsi un dispositif de mesure qui soit de conception et de mise en oeuvre plus simple, tout en étant compact.

### DEFINITION GENERALE DE L'INVENTION

Le problème précité est résolu conformément à l'invention par un dispositif de mesure tridimensionnelle selon la revendication indépendante de dispositif 1. Les modes particuliers de réalisation de l'invention sont définis dans les revendications dépendantes 2 à 17. Le dispositif selon l'invention, afin d'avoir les coordonnées tridimensionnelles d'un point, combine donc deux mouvements de rotation, celui du plateau tournant par rapport à la base fixe du dispositif d'une part, celui du bras télescopique par rapport au plateau tournant d'autre part, avec un mouvement de translation, celui du bras dont l'extrémité peut se déplacer axialement selon que le bras est en position complètement rétractée, en position intermédiaire ou en position complètement déployée.

De fait, le palpeur de mesure équipant l'extrémité du bras unique télescopique peut se déplacer dans un volume délimité par deux demi-sphères concentriques correspondant respectivement à l'allongement minimum (correspondant à la position complètement rétractée) dudit bras unique télescopique et à l'allongement maximum (correspondant à la position complètement déployée) dudit bras unique télescopique.

Le dispositif selon l'invention permet des mesures tridimensionnelles avec une économie de moyens et un gain de place remarquables : en effet, il ne met en oeuvre qu'un seul bras articulé. En outre, du fait même de sa compacité, il est aisé à déplacer sur l'ensemble de support, et, selon la longueur de la course choisie pour la tige télescopique, il peut s'adapter à la mesure de points se trouvant à des distances, notamment des hauteurs, très variables par rapport à l'ensemble support : dans une application visant les appareils de mesure sur les bancs de contrôle de véhicules endommagés, le dispositif de mesure selon l'invention s'adapte à de nombreuses configurations de véhicule.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :
- la figure 1 est une vue schématique en perspective d'un exemple de réalisation d'un dispositif de mesure tridimensionnelle selon l'invention permettant de visualiser les différents mouvements de translation et de rotation de ses composants ;
- la figure 2 est une vue de dessus du banc de réglage sur lequel le dispositif de mesure selon la figure 1 est destiné à être monté ;
- la figure 3 est une vue en perspective du dispositif de mesure tridimensionnelle selon la figure 1 monté sur le banc de réglage (ensemble de support) selon la figure 2 ;
- les figures 4a-4b sont des vues en perspective plus détaillées du dispositif de mesure selon la figure 1, avec (figure 4a) et sans (figure 4b) capot protecteur;
- la figure 5 est une vue en éclaté de certains des composants du dispositif selon les figure 4a-4b, qui illustre le mode de montage du plateau sur la base et du bras télescopique sur le plateau ;
- la figure 6 est une vue en section du dispositif selon la figure 4b ;
- la figure 7 représente un détail de la vue selon la figure 6, représentant la base, le plateau tournant et l'extrémité inférieure du bras unique télescopique.

L'ensemble des figures est schématique et ne respecte pas nécessairement l'échelle pour en faciliter la lecture, chaque élément représenté conservant la même référence dans l'ensemble des figures.

### DESCRIPTION DETAILLEE D'UN MODE DE REALISATION PREFERE

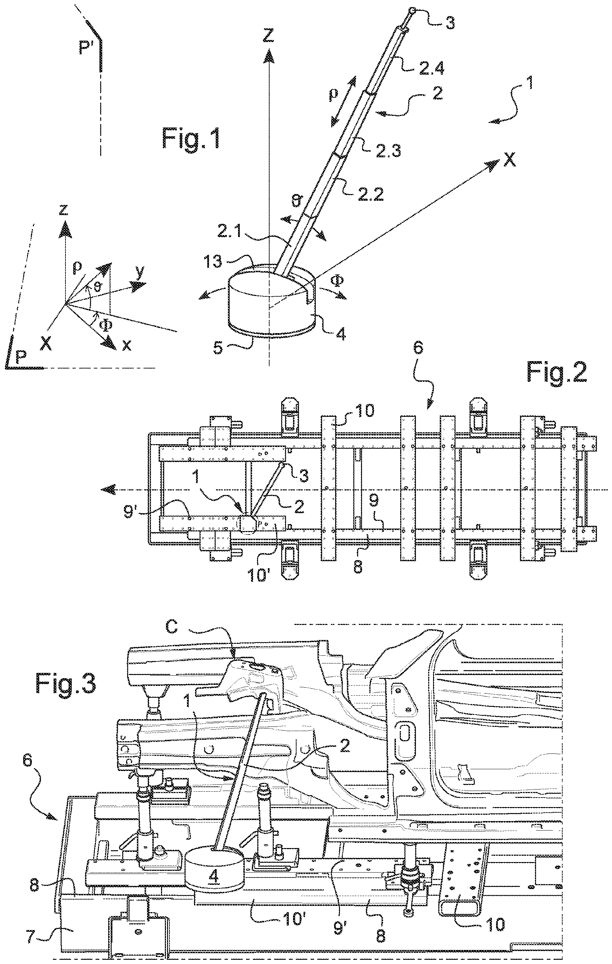

La figure 1 représente schématiquement le dispositif de mesure 1 selon l'invention destiné à être monté sur un banc de contrôle afin de mesurer la position de points de composants d'un véhicule.

Le dispositif est représenté à la figure 1 tel qu'il est disposé une fois monté sur le banc de contrôle.

Ce dispositif comprend un bras unique télescopique 2 monté par son extrémité inférieure à un plateau tournant, non visible à cette figure car disposé sous un capot protecteur 4, ce plateau tournant étant lui-même monté sur une base 5 destinée à être fixée sur le banc de contrôle (éléments détaillés à l'aide des figures suivantes).

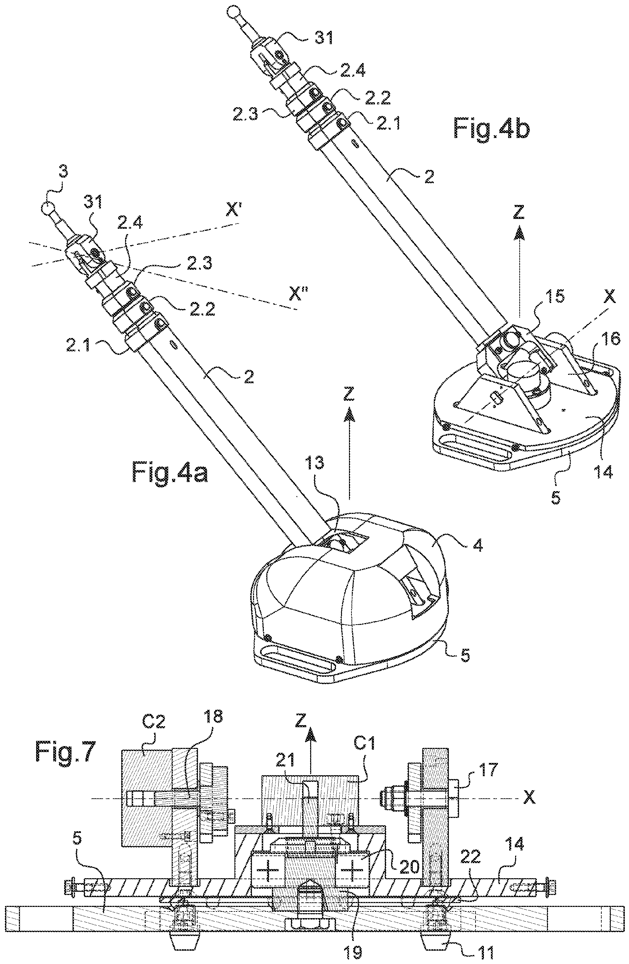

Le bras unique télescopique 2 est muni à son extrémité supérieure d'un palpeur 3, et, de façon connue, est composé de plusieurs tiges creuses 2.1,2.2,2.3,2.4, de section ici par exemple rectangulaire et coulissant les unes dans les autres. Dans cet exemple elles sont au nombre de quatre, et elles sont représentées dans leur position déployée maximum. Le palpeur 3, de façon connue, se présente sous la forme d'une tête sphérique, ici fixée au bras 2 par l'intermédiaire d'une chappe 31. Dans cet exemple, la tête 3 peut pivoter par rapport au bras 2 selon deux axes : elle peut pivoter autour de l'axe X' d'articulation de la chappe 31 telle que représentée à la figure 4a. Le montage de la chappe 31 sur le bras 2 autorisant le pivotement de la chappe 31 d'un quart de tour par un système de vis à billes non représenté, la tête 3 peut également pivoter autour d'un second axe X" perpendiculaire à l'axe X'.

Dans cet exemple, la tête 3 ne peut prendre qu'un certain nombre de positions prédéterminées par rapport à l'axe X' et par rapport à l'axe X", positions indexées dont l'opérateur informe le calculateur associé préalablement à la mesure par les trois capteurs c1, c2 et c3, comme décrit plus loin. Alternativement, si on veut que la tête 3 puisse prendre des positions angulaires de façon continue dans une plage angulaire donnée, on peut alors équiper la tête d'un quatrième capteur angulaire, qui va, de façon connue, mesurer précisément cette position (de façon similaire aux mesures angulaires des capteurs c1 et c2 et comme cela est connu de la technologie des bras articulés par exemple décrite dans le document WO2006/000630A1 précité).

Alternativement, la tête 3 peut avoir une forme allongée ou se présenter sous la forme d'une pointe.

D'une part, le plateau tournant est monté sur la base 5 de façon à pouvoir tourner par rapport à la base autour d'un axe Z d'un angle Φ, dans un plan P.

D'autre part, l'extrémité inférieure du bras unique 2 est articulée sur le plateau tournant de façon à ce que le bras puisse pivoter autour d'un axe X orthogonal à l'axe Z d'un angle θ dans un plan P' perpendiculaire au plan P contenant la base 5 et son plateau tournant.

Enfin, l'extrémité supérieure du bras unique 2 est capable de s'allonger d'une longueur ρ variant entre une valeur minimale où le bras est en position complètement rétractée (comme représenté aux figures 4a,4b) et une valeur maximale où le bras est en position complètement déployée (comme représenté à la figure 1).

Le palpeur 3 peut donc être repéré dans l'espace dans un référentiel fixe par ses coordonnées polaires dans un référentiel constitué par la base 5 une fois celle-ci fixée au banc de contrôle, à partir des mesures des angles Φ et θ et de l'allongement ρ.

La figure 2 représente un ensemble de support, ou banc de contrôle 6, sur lequel on vient fixer la base 5 du dispositif 1 selon l'invention. La figure 3 est complémentaire à la figure 2, en représentant en perspective le montage du dispositif sur ce même banc. Le banc comporte une surface usinée 8 elle-même percée de trous 9 sur toute sa longueur, trous permettant de positionner des traverses longitudinales 10 et des traverses transversales 10' par des éléments saillants prévus sur les traverses et non représentés. Les traverses transversales et longitudinales sont elles-mêmes munies de trous 9' permettant de centrer le dispositif 1 comme décrit plus loin.

Le dispositif 1 est associé à un emplacement choisi de l'ensemble de support 6 par des moyens de centrage et des moyens de maintien coopérant entre ledit dispositif 1 et ledit ensemble de support 6 pour assurer le référencement et le maintien de la base du dispositif sur son ensemble de support pour chaque positionnement possible de la base sur l'ensemble de support.

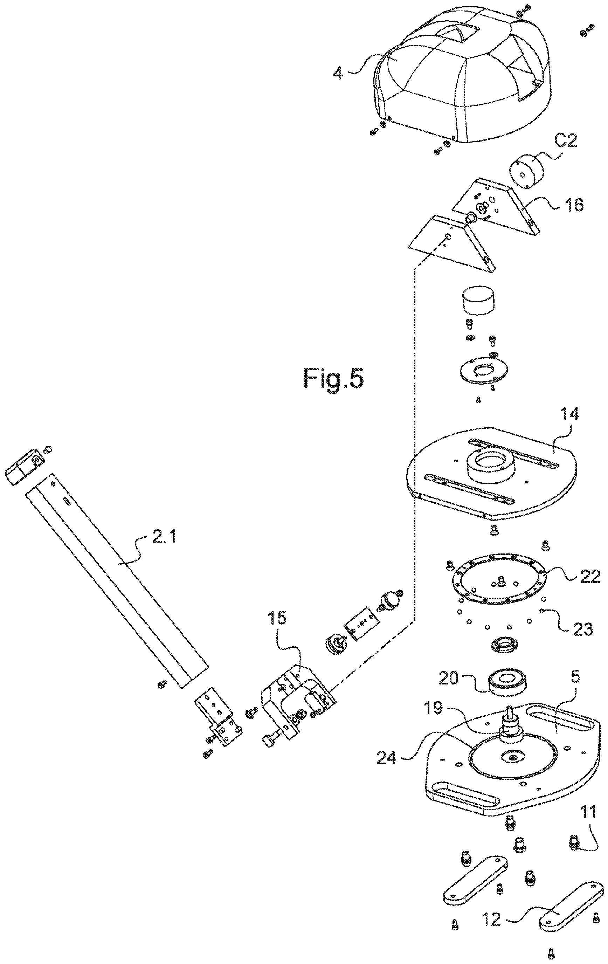

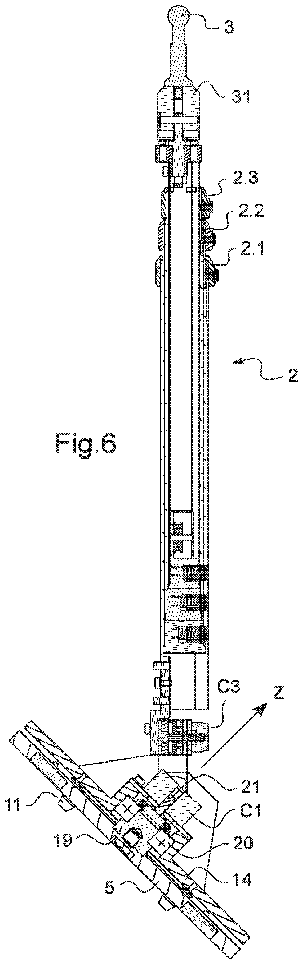

Ceci est réalisé, dans cet exemple de réalisation, de la façon suivante (illustrée à la fois par la figure 3 et par les figures 5,6 et 7) : on peut déplacer la base 5 du dispositif de mesure 1 le long de chaque traverse 10 et 10'.

La base 5 est munie de moyens de centrage vis-à-vis de l'ensemble de support comprenant des pions de centrage 11 aptes à coopérer avec des orifices 9' prévus sur l'ensemble de support 6. Dans cet exemple, La base 5 est munie de pions de centrage 11 fixés et répartis sur sa face inférieure, ici à titre d'exemple au nombre de quatre. Elle peut être positionnée et référencée par rapport à une traverse longitudinale 10 ou transversale 10' en insérant ses quatre pions de centrage 11 dans quatre des orifices 9' d'une traverse 10 ou 10' en fonction de la position choisie.

La base 5 est également munie de moyens de maintien sur l'ensemble de support 6 comprenant des aimants 12 aptes à coopérer avec des surfaces métalliques des traverses 10 et 10' prévues sur l'ensemble de support 6. Dans cet exemple, une fois la base 5 positionnée par ses pions, elle est maintenue en place à l'aide d'aimants fixés par boulonnage sur sa face inférieure, visibles à la figure 5 sous la référence 12, aux traverses 10 et 10' de nature métallique.

La figure 3 représente également une portion de carrosserie C, disposée au dessus du banc de contrôle, contre laquelle on vient manuellement disposer la tête de mesure 3 sur un point donné pour prendre la mesure (point de référence qui peut se présenter sous la forme d'un orifice ou d'un creux facilitant le positionnement de la tête sphérique du palpeur 3).

Les figures 4a, 4b représentent des vues avec et sans capot protecteur du dispositif de mesure de l'invention, le bras unique télescopique 2 étant en position rétractée. Le capot de protection 4 selon la figure 4a comporte une fente diamétrale 13 autorisant le mouvement oscillant du bras unique 2, lui permettant ainsi de pivoter librement selon une amplitude angulaire prédéterminée. Le capot 4 permet ainsi de protéger des chocs et de la poussière les éléments de montage et d'articulation du bras unique 2 sans empêcher son mouvement.

Le reste de la description du dispositif selon l'invention sera décrit au vu de l'ensemble des figures 4b à 7, en s'attachant à décrire les éléments les plus significatifs.

Ces figures montrent un plateau tournant 14, qui est monté tournant sur la base 5 et sur laquelle s'articule le bras unique télescopique 2 de la façon suivante : la première extrémité (l'extrémité inférieure ici) du bras unique télescopique 2 comporte une fourche d'articulation 15 articulée sur une chappe 16 du plateau tournant 14. Ce montage par fourche permet une meilleure répartition des efforts exercés par le bras unique 2 sur le plateau 14.

Chacune des branches de la fourche d'articulation 15 est munie d'un orifice coïncidant en position de montage avec un orifice prévu dans la chappe 16, afin de monter la fourche sur la chappe par des moyens de fixation traversants. D'un côté, il s'agit de moyens de fixation classiques, par exemple par boulonnage 17. Mais l'un des moyens de fixation, de l'autre côté, comprend une tige 18 sur laquelle est monté le second capteur c2 servant à déterminer l'angle de rotation θ du bras télescopique oscillant, la tige 18 remplissant ainsi deux fonctions à la fois, à savoir monter le bras unique télescopique 2 sur la chappe 16 et servir de référence au capteur c2 pour qu'il puisse mesurer l'amplitude de rotation du bras unique 2 autour de l'axe X.

Le plateau 14 est monté tournant sur la base 5 par un système de roulement à billes centré sur le premier axe Z, comme représenté plus en détails à la figure 7. Ce système de roulement à billes comporte un tourillon central 19 centré sur le premier axe Z, qui est couplé mécaniquement à la base 5 et coiffé d'une bague 20 à roulement à billes elle-même couplée mécaniquement au plateau tournant 14. Le plateau 14 accueille le roulement à billes (monté serré sur le plateau 14). La bague 20 a comme fonctionnalité de maintenir le plateau 14 en appui sur les billes 23 (figure 5), assurant ainsi, couplé au roulement à billes, une parfaite rotation autour de l'axe Z. On ne rentre pas ici dans le détail du roulement à billes, connu en soi.

Ce tourillon central 19 comporte une tige centrale 21 traversant la bague 20 à roulement à billes, tige sur laquelle est monté le premier capteur c1 servant à déterminer l'angle de rotation Φ du plateau 14 autour de l'axe Z.

Il est également prévu un système de roulement à billes auxiliaire, optionnel, assurant le maintien d'une distance constante entre la base 5 et le plateau tournant 14, et donc un parallélisme parfait. Ce système, visible aux figures 5 et 7, comporte une couronne 22 percée d'orifices, qui coopère avec une rainure 24 présente sur la face de la base 5 tournée vers le plateau tournant 14 par un ensemble de billes 23 disposées entre couronne et rainure. Les billes 23 sont positionnées par les orifices de la couronne 22 et sont maintenues en position par serrage approprié. Ce moyen auxiliaire permet d'éviter tout gauchissement du plateau 14 par rapport à la base 5, et garantit le calage, ici la verticalité, de l'axe Z.

Le troisième capteur c3 est monté au voisinage de la première extrémité, l'extrémité inférieure ici, du bras unique télescopique 2. Il est destiné à mesurer l'allongement ρ du bras, et comprend un tambour sur lequel est enroulé un ruban dont l'autre extrémité est fixée au voisinage de la seconde extrémité du bras télescopique, et dans lequel est monté un ressort de rappel (éléments non détaillés ici). Le capteur c3 est agencé de manière à ce que le ruban fait tourner le tambour lors du déploiement du bras unique télescopique 2 en se déroulant, entraînant la compression du ressort, et en ce que le ruban se rembobine sur le tambour par détente dudit ressort lors du repli du bras.

En mode de fonctionnement, le dispositif de mesure est associé à un calculateur non représenté apte à recueillir et à traiter les mesures déterminées par les capteurs c1, c2, et c3. Il s'agit par exemple d'un ordinateur portable, relié aux capteurs du dispositif par des moyens filaires, ou, plus commodément, par des moyens de communication non filaire (de type « Bluetooth » notamment).

La mesure se fait de la façon suivante, comme montré en figure 3 : une fois le dispositif fixé et référencé sur le support 6, l'opérateur positionne le dispositif de mesure 1 sur une des traverses 10 ou 10', et informe le calculateur de la position du dispositif 1 sur cette traverse 10 ou 10'. L'opérateur approche la tête du palpeur 3 du point de la carrosserie à vérifier en allongeant le bras unique télescopique 2. L'opérateur ajuste ensuite le positionnement de la tête 3 sur le point de référence de la carrosserie d'un véhicule, en choisissant préalablement à toute mesure la position de la tête 3 par rapport au bras unique 2 la plus appropriée, en faisant pivoter jusqu'à la position voulue la tête 3 par rapport à l'axe X' ou X". Il informe le calculateur de la position choisie de la tête 3 parmi un nombre de positions indexées possibles par rapport au bras unique 2, de façon à ce que le calculateur prenne en considération cette donnée, puis il déclenche manuellement la mesure simultanée par les trois capteurs c1, c2 et c3. Le moyen de déclenchement manuel peut être réalisé, de manière connue, par un bouton (non représenté) sur le dispositif lui-même, notamment au niveau du bras unique 2 ou du capot 4, ou par commande au niveau du calculateur/de l'ordinateur, ou à l'aide d'une télécommande. Le calculateur, ici l'ordinateur, recueille les données mesurées, et fait les calculs appropriés afin de déterminer les coordonnés spatiales du point considéré. Une fois les calculs terminés, son écran affiche les résultats, qui sont comparés, soit par le calculateur lui-même, soit par l'opérateur, à l'aide de tables de référence.

En conclusion, l'invention a donc proposé un nouveau type de dispositif de mesure tridimensionnelle plus compact et aussi fiable que les dispositifs connus des solutions antérieures connues. En outre, son système de maintien et de référencement par rapport à son support, appelé aussi communément banc de contrôle ou encore marbre, dans le cadre de la réparation de véhicules, évite d'avoir à effectuer séparément une mesure d'assiette du véhicule à contrôler.

L'invention porte également sur l'utilisation du dispositif tel que précédemment décrit pour le contrôle des déformations de composants de véhicule endommagé.

L'invention n'est pas limitée au mode de réalisation qui vient d'être décrit : elle englobe également toute variante reprenant, avec des moyens équivalents, les caractéristiques énoncées plus haut.

## Revendications

1. Dispositif de mesure tridimensionnelle, **caractérisé en ce qu'**il comprend :
- une base (5) destinée à être fixée sur un ensemble de support (6) et s'étendant dans un premier plan (P),
- un plateau (14) monté pour tourner sur la base (5) autour d'un premier axe (Z) orthogonal à ce premier plan (P), ledit plateau étant équipé d'un premier capteur (c1) déterminant l'angle de rotation (Φ) du plateau autour de ce premier axe (Z),
- un bras unique (2) composé de plusieurs tiges creuses (2.1, 2.2, 2.3, 2.4) coulissant les unes dans les autres, ce bras unique étant télescopique et oscillant (2), une première extrémité de ce bras unique étant articulée sur le plateau (14) autour d'un deuxième axe (X) orthogonal au premier axe (Z) de façon à pouvoir osciller dans un deuxième plan (P') contenant le premier axe (Z) et orthogonal au deuxième axe (X), l'angle de rotation (θ) dudit bras unique autour du deuxième axe (X) étant déterminé par un deuxième capteur (c2), la seconde extrémité du bras unique télescopique étant munie d'un palpeur de mesure (3), et ledit bras unique étant équipé d'un troisième capteur (c3) déterminant la longueur d'allongement (ρ) du bras en translation,
la position spatiale du palpeur de mesure (3) étant déterminée par ses coordonnées polaires (ρ, θ, Φ) dans le référentiel tridimensionnel fixe constitué par la base (5) une fois celle-ci fixée sur l'ensemble support (6).

2. Dispositif selon la revendication précédente, **caractérisé en ce que** la première extrémité du bras unique télescopique (2) comporte une fourche d'articulation (15) articulée par rapport à une chappe (16) du plateau tournant (14).

3. Dispositif selon la revendication précédente, **caractérisé en ce que** chacune des branches de la fourche (15) d'articulation est munie d'un orifice coïncidant en position de montage avec un orifice prévu dans la chappe(16) du plateau tournant (14), afin de monter la fourche sur la chappe par des moyens de fixation traversants (17).

4. Dispositif selon la revendication précédente, **caractérisé en ce que** l'un des moyens de fixation comprend une tige (18) sur laquelle est monté le second capteur (c2) pour déterminer l'angle de rotation (θ) du bras unique télescopique oscillant (2).

5. Dispositif selon l'une des revendications précédentes, **caractérisé en ce que** le plateau (14) est monté tournant sur la base par un système de roulement à billes centré sur le premier axe (Z).

6. Dispositif selon la revendication précédente, **caractérisé en ce que** le système de roulement à billes comporte un tourillon central (19) centré sur le premier axe (Z), qui est couplé mécaniquement à la base (5) et coiffé d'une bague (20) à roulement à billes elle-même couplée mécaniquement au plateau tournant (14).

7. Dispositif selon la revendication précédente, **caractérisé en ce que** le tourillon central (19) comporte une tige centrale (21) traversant la bague (20) à roulement à billes, tige sur laquelle est monté le premier capteur (c1) pour déterminer l'angle de rotation (Φ) du plateau (14) autour du premier axe (Z).

8. Dispositif selon l'une des revendications 5 à 7, **caractérisé en ce qu'**il comprend un système de roulement à billes auxiliaire (22,23,24) assurant le maintien d'une distance constante entre la base (5) et le plateau tournant (14).

9. Dispositif selon l'une des revendications précédentes, **caractérisé en ce que** le troisième capteur (c3) est monté au voisinage de la première extrémité du bras télescopique (2).

10. Dispositif selon la revendication précédente, **caractérisé en ce que** le troisième capteur (c3) comprend un tambour sur lequel est enroulé un ruban dont l'autre extrémité est fixée au voisinage de la seconde extrémité du bras télescopique (2), et dans lequel est monté un ressort de rappel.

11. Dispositif selon l'une des revendications précédentes, **caractérisé en ce que** le plateau (14) est muni d'un capot de protection (4) comportant une fente diamétrale (13) autorisant le mouvement oscillant du bras unique télescopique (2).

12. Dispositif selon l'une des revendications précédentes, **caractérisé en ce que** le palpeur de mesure comprend une tête (3), notamment sphérique, montée de façon articulée, notamment selon un ou deux axes (X',X"), par rapport au bras unique télescopique(2).

13. Dispositif selon l'une des revendications précédentes, **caractérisé en ce qu'**il est associé à un calculateur apte à recueillir et à traiter les mesures déterminées par les capteurs (c1,c2,c3).

14. Dispositif selon l'une des revendications précédentes, **caractérisé en ce que** la base (5) est munie de moyens de centrage vis-à-vis de l'ensemble de support (6) comprenant des pions de centrage (11) aptes à coopérer avec des orifices (9') prévus sur l'ensemble de support.

15. Dispositif selon l'une des revendications précédentes, **caractérisé en ce que** la base (5) est munie de moyens de maintien sur l'ensemble de support (6) comprenant des aimants (12) aptes à coopérer avec une traverse métallique (10,10') prévue sur l'ensemble de support (6).

16. Dispositif selon l'une des revendications précédentes, **caractérisé en ce qu'**il comprend un moyen de déclenchement manuel de mesure simultané par les premier, deuxième et troisième capteurs (c1,c2,c3).

17. Dispositif selon l'une des revendications précédentes, **caractérisé en ce qu'**il est associé à un ensemble de support (6) par des moyens de centrage (11,9') et des moyens de maintien (12, 10,10')coopérant entre ledit dispositif (1) et ledit ensemble de support (6) pour assurer le référencement et le maintien de la base du dispositif sur son ensemble de support pour chaque positionnement possible de la base sur l'ensemble de support.

## Patentansprüche

1. Vorrichtung zur dreidimensionalen Messung, **dadurch gekennzeichnet, dass** sie umfasst:
- eine Basis (5), die dazu bestimmt ist, auf einer Trägeranordnung (6) befestigt zu werden, und die sich in einer ersten Ebene (P) erstreckt,
- eine Platte (14), die auf der Basis (5) drehbar um eine erste Achse (Z) gelagert ist, die orthogonal zu dieser ersten Ebene (P) ist, wobei die genannte Platte mit einem ersten Sensor (c1) ausgerüstet ist, der den Drehwinkel (Φ) der Platte um diese erste Achse (Z) bestimmt,
- einen einzigen Arm (2), der aus mehreren hohlen Stangen (2.1, 2.2, 2.3, 2.4) zusammengesetzt ist, die sich ineinander verschieben lassen, wobei dieser einzige Arm (2) teleskopisch und schwingend ist, wobei ein erstes Ende dieses einzigen Arms an der Platte (14) um eine zweite Achse (X) angelenkt ist, die orthogonal zur ersten Achse (Z) ist, so dass er in einer zweiten Ebene (P'), die die erste Achse (Z) enthält und orthogonal zur zweiten Achse (X) ist, schwingen kann, wobei der Drehwinkel (θ) des einzigen Arms um die zweite Achse (X) von einem zweiten Sensor (c2) bestimmt wird, wobei das zweite Ende des einzigen Teleskoparms mit einem Messtaster (3) versehen ist, und wobei der einzige Arm mit einem dritten Sensor (c3) ausgerüstet ist, der die Streckungslänge (ρ) des Arms in Translation bestimmt,
wobei die räumliche Position des Messtasters (3) von seinen Polarkoordinaten (ρ, θ, Φ) in dem ortfesten dreidimensionalen Bezugssystem bestimmt wird, das von der Basis (5) gebildet wird, sobald diese auf der Trägeranordnung (6) befestigt ist.

2. Vorrichtung nach dem vorhergehenden Anspruch, **dadurch gekennzeichnet, dass** das erste Ende des einzigen Teleskoparms (2) eine Gelenkverbindungsgabel (15) umfasst, die in Bezug auf einen Lagerbock (16) der Drehplatte (14) angelenkt ist.

3. Vorrichtung nach dem vorhergehenden Anspruch, **dadurch gekennzeichnet, dass** jeder der Schenken der Gelenkverbindungsgabel (15) mit einer Öffnung versehen ist, die in der Montageposition mit einer Öffnung zusammenfällt, die in dem Lagerbock (16) der Drehplatte (14) vorgegehen ist, um die Gabel über durchgehende Befestigungsmittel (17) an dem Lagerbock anzubringen.

4. Vorrichtung nach dem vorhergehenden Anspruch, dadurch gekennzeichnest, dass eines der Befestigungsmittel eine Stange (18) umfasst, auf der der zweite Sensor (c2) angebracht ist, um den Drehwinkel (θ) des einzigen schwingenden Teleskoparms (2) zu bestimmen.

5. Vorrichtung nach einem der vorhergehenden Ansprüche, **dadurch gekennzeichnet, dass** die Platte (14) über ein auf die erste Achse (Z) zentriertes Kugellagersystem drehbar auf der Basis gelagert ist.

6. Vorrichtung nach dem vorhergehenden Anspruch, **dadurch gekennzeichnet, dass** das Kugellagersystem einen auf die erste Achse (Z) zentrierten zentralen Drehzapfen (19) umfasst, der mechanisch mit der Basis (5) gekoppelt und von einem Kugellagerring (20) abgedeckt ist, der selbst mechanisch mit der Drehplatte (14) gekoppelt ist.

7. Vorrichtung nach dem vorhergehenden Anspruch, **dadurch gekennzeichnet, dass** der zentrale Drehzapfen (19) eine zentrale Stange (21) umfasst, die den Kugellagerring (20) durchsetzt, eine Stange auf der der erste Sensor (c1) angebracht ist, um den Drehwinkel (Φ) der Platte (14) um die erste Achse (Z) zu bestimmen.

8. Vorrichtung nach einem der Ansprüche 5 bis 7, **dadurch gekennzeichnet, dass** sie ein Hilfskugellagersystem (22, 23, 24) umfasst, welches das Halten eines konstanten Abstandes zwischen der Basis (5) und der Drehplatte (14) sicherstellt.

9. Vorrichtung nach einem der vorhergehenden Ansprüche, **dadurch gekennzeichnet, dass** der dritte Sensor (c3) nahe dem ersten Ende des Teleskoparms (2) angebracht ist.

10. Vorrichtung nach dem vorhergehenden Anspruch, dadurch gekennzeichnest, dass der dritte Sensor (c3) eine Trommel umfasst, auf die ein Band gewickelt ist, dessen anderes Ende nahe dem zweiten Ende des Teleskoparms (2) befestigt ist, und in der eine Rückstellfeder gelagert ist.

11. Vorrichtung nach einem der vorhergehenden Ansprüche, **dadurch gekennzeichnet, dass** die Platte (14) mit einer Schutzkappe (4) versehen ist, die einen diametralen Schlitz (13) umfasst, der die Schwingbewegung des einzigen Teleskoparms (2) gestattet.

12. Vorrichtung nach einem der vorhergehenden Ansprüche, **dadurch gekennzeichnet, dass** der Messtaster einen Kopf (3) umfasst, insbesondere einen Kugelkopf, der in Bezug auf den einzigen Teleskoparm (2) auf gelenkige Weise insbesondere gemäß einer oder zwei Achsen (X', X") gelagert ist.

13. Vorrichtung nach einem der vorhergehenden Ansprüche, **dadurch gekennzeichnet, dass** sie mit einem Rechner verbunden ist, der dazu geeignet ist, die durch die Sensoren (c1, c2, c3) bestimmten Messungen zu empfangen und zu verarbeiten.

14. Vorrichtung nach einem der vorhergehenden Ansprüche, **dadurch gekennzeichnet, dass** die Basis (5) mit Mitteln zur Zentrierung in Bezug auf die Trägeranordnung (6) versehen ist, die Zentrierstifte (11) umfassen, die dazu geeignet sind, mit an der Trägeranordnung vorgesehenen Öffnungen (9') zusammenzuwirken.

15. Vorrichtung nach einem der vorhergehenden Ansprüche, **dadurch gekennzeichnet, dass** die Basis (5) mit Haltemitteln zum Halten an der Trägeranordnung (6) versehen ist, die Magnete (12) umfassen, die dazu geeignet sind, mit einer metallenen Schiene (10, 10') zusammenzuwirken, die auf der Trägeranordnung (6) vorgesehen ist.

16. Vorrichtung nach einem der vorhergehenden Ansprüche, **dadurch gekennzeichnet, dass** sie ein Mittel zum manuellen Auslösen der gleichzeitigen Messung durch den ersten, zweiten und dritten Sensor (c1, c2, c3) umfasst.

17. Vorrichtung nach einem der vorhergehenden Ansprüche, **dadurch gekennzeichnet, dass** sie mit einer Trägeranordnung (6) über Zentriermittel (11, 9') und Haltemittel (12, 10, 10') verbunden ist, die zwischen der Vorrichtung (1) und der genannten Trägeranordnung (6) zusammenwirken, um die Referenzierung und das Halten der Basis der Vorrichtung auf ihrer Trägeranordnung für jede mögliche Positionierung der Basis auf der Trägeranordnung zu gewährleisten.

## Claims

1. A three-dimensional measuring device, **characterised in that** it comprises:
- a base (5) intended to be fixed to a support assembly (6) and lying in a first plane (P),
- a plate (14) mounted so as to rotate on the base (5) about a first axis (Z) orthogonal to this first plane (P), said plate being equipped with a first sensor (c1) determining the angle of rotation (Φ) of the plate about this first axis (Z),
- a single rocking telescopic arm (2) composed of several hollow rods (2.1, 2.2, 2.3, 2.4) sliding in one another, a first end of which is articulated on the plate (14) about a second axis (X) orthogonal to the first axis (Z) so as to be able to rock in a second plane (P') containing the first axis (Z) and orthogonal to the second axis (X), the angle of rotation (θ) of said single arm about the second axis (X) being determined by a second sensor (c2), the second end of the single telescopic arm being provided with a measuring feeler (3), and the said single arm being equipped with a third sensor (c3) determining the elongation length (ρ) of the arm in translation,
the spatial position of the measuring feeler being determined by its polar coordinates (ρ, θ, Φ) in the fixed three-dimensional reference frame consisting of the base (5) once the latter is fixed to the support assembly (6).

2. A device according to the preceding claim, **characterised in that** the first end of the single telescopic arm (2) comprises an articulation fork (15) articulated with respect to a trunnion (16) on the rotating plate (14).

3. A device according to the preceding claim, **characterised in that** each of the arms of the articulation fork (15) is provided with an orifice coinciding in the mounting position with an orifice provided in the trunnion (16) on the rotating plate (14), in order to mount the fork on the trunnion by through fixing means (17).

4. A device according to the preceding claim, **characterised in that** one of the fixing means comprises a rod (18) on which the second sensor (c2) is mounted so as to determine the rotation angle (θ) of the single rocking telescopic arm (2).

5. A device according to one of the preceding claims, **characterised in that** the plate (14) is mounted so as to rotate on the base by means of a ball bearing system centred on the first axis (Z).

6. A device according to the preceding claim, **characterised in that** the ball bearing system comprises a central swivel (19) centred on the first axis (Z), which is mechanically coupled to the base (5) and covered by a ball-bearing raceway (20) itself mechanically coupled to the rotating plate (14).

7. A device according to the preceding claim, **characterised in that** the central swivel (19) comprises a central rod (21) passing through the ball-bearing raceway (20), a rod on which the first sensor (c1) is mounted so as to determine the rotation angle (Φ) of the plate (14) about the first axis (Z).

8. A device according to one of claims 5 to 7, **characterised in that** it comprises an auxiliary ball bearing system (22, 23, 24) ensuring the maintenance of a constant distance between the base (5) and the rotating plate (14).

9. A device according to one of the preceding claims, **characterised in that** the third sensor (c3) is mounted in the vicinity of the first end of the telescopic arm (2).

10. A device according to the preceding claim, **characterised in that** the third sensor (c3) comprises a drum on which a ribbon is coiled, the other end of which is fixed close to the second end of the telescopic arm (2), and in which a return spring is mounted.

11. A device according to one of the preceding claims, **characterised in that** the plate (14) is provided with a protective cover (4) comprising a diametral slot (13) allowing the rocking movement of the single telescopic arm (2).

12. A device according to one of the preceding claims, **characterised in that** the measuring feeler comprises a head (3), in particular spherical, mounted in an articulated fashion, in particular on one or two axes (X', X"), with respect to the single telescopic arm (2).

13. A device according to one of the preceding claims, **characterised in that** it is associated with a computer able to collect and process the measurements determined by the sensors (c1, c2, c3).

14. A device according to one of the preceding claims, **characterised in that** the base (5) is provided with means of centring vis-a-vis the support assembly (6) comprising centring pins (11) able to cooperate with orifices (9') provided on the support assembly.

15. A device according to one of the preceding claims, **characterised in that** the base (5) is provided with means of holding on the support assembly (6) comprising magnets (12) able to cooperate with a metal bar (10, 10') provided on the support assembly (6).

16. A device according to one of the preceding claims, **characterised in that** it comprises a means of manual triggering of a simultaneous measurement by the first, second and third sensors (c1, c2, c3).

17. A device according to one of the preceding claims, **characterised in that** it is associated with a support assembly (6) by centring means (11, 9') and holding means (12, 10, 10') cooperating between the said device (1) and the said support assembly (6) in order to ensure the referencing and holding of the base of the device on its support assembly for each possible positioning of the base on the support assembly.
